# EUROPEAN PATENT SPECIFICATION

(11) **EP 2 369 157 B1**
(45) Date of publication and mention of the grant of the patent: **12.12.2012**
(21) Application number: 11151563.1
(22) Date of filing: 20.01.2011
(51) Int. Cl.: F02D 11/02, F02B 63/02, F16C 1/22

(54) **An adjustment and blocking system of an accelerator cable**
Einstell- und Blockiersystem für ein Beschleunigungskabel
Système d'ajustement et de blocage d'un câble d'accélérateur

(30) Priority: 26.03.2010 IT RE20100028
(43) Date of publication of application: 28.09.2011
(73) Proprietor: Emak S.p.A., 42011 Bagnolo in Piano (Reggio Emilia) (IT)
(72) Inventor: Cocchi, Marco, 42011, Bagnolo in Piano (Reggio Emilia) (IT)
(74) Representative: Corradini, Corrado

(56) References cited:
- US-A- 4 294 133
- US-A- 4 898 039
- US-A1- 2004 040 539
- US-B1- 6 552 891

## Description

The present invention relates to small work machines comprising an internal combustion engine, generally a small-cylinder two-stroke engine which activates a tool, such as for example a hedge trimmer, in which some commands comprise a lever located within the reach of the operator and at a distance from the organ which is to be commanded.

The connection between the lever and the organ is achieved by a Bowden-type sheathed cable.

A typical organ commanded in this way is the carburettor butterfly valve, which is activated remotely by the operator via a sheathed cable which commands the movements of the butterfly valve.

One of the more frequent drawbacks of this type of command derives from the fact that the ends of the sheath containing the cable have to be solidly blocked, both in proximity of the command lever and in proximity of the commanded organ.

The correct blocking of the ends of the sheath, or at least the end closer to the commanded organ, is essential for the precision of the transmitted command.

This is because it guarantees that the displacement of the commanded organ is exclusively due to the translations of the cable in the sheath, without there being any undesired displacements of the sheath.

If the command is transmitted imprecisely, for example due to the fact that the command lever draws the sheath with it over a certain tract, the regular functioning of the commanded organ is compromised, and thus so is the functioning of the engine.

Obviously the sheath can be fixedly blocked at one of the ends thereof, generally the end closer to the command lever, and the registration of the sheath end can advantageously be performed only at the end closer to the commanded organ.

Examples of such known systems according to the preamble of the claim 1 is described in US 4 898 039 and US 6 552 891.

The aim of the present invention is to make available a blocking and adjusting system of the command cable of an organ of a small internal combustion engine in which the command is remotely activated.

The objective is attained by the system having the characteristics recited in the independent claim.

The dependent claims recite further characteristics of the invention destined to improve the efficiency thereof.

In the invention the sheath of the cable of the accelerator is blocked in proximity of the commanded organ, by realising a vice between two bodies, and the position of the end of the sheath of the command cable in the vice is priorly adjusted by means of a knurled adjusting roller located in contact with the sheath and having an axis which is perpendicular to the axis of the sheath.

One of the two bodies is in a single piece with the engine casing, or with the engine containment casing, while the other body is separate from the casing and locked by means of screws.

The functional and constructional advantages and characteristics of the invention will better emerge from the detailed description that follows, with the help of the accompanying tables of the drawings, which illustrate a preferred embodiment thereof given by way of non-limiting example.

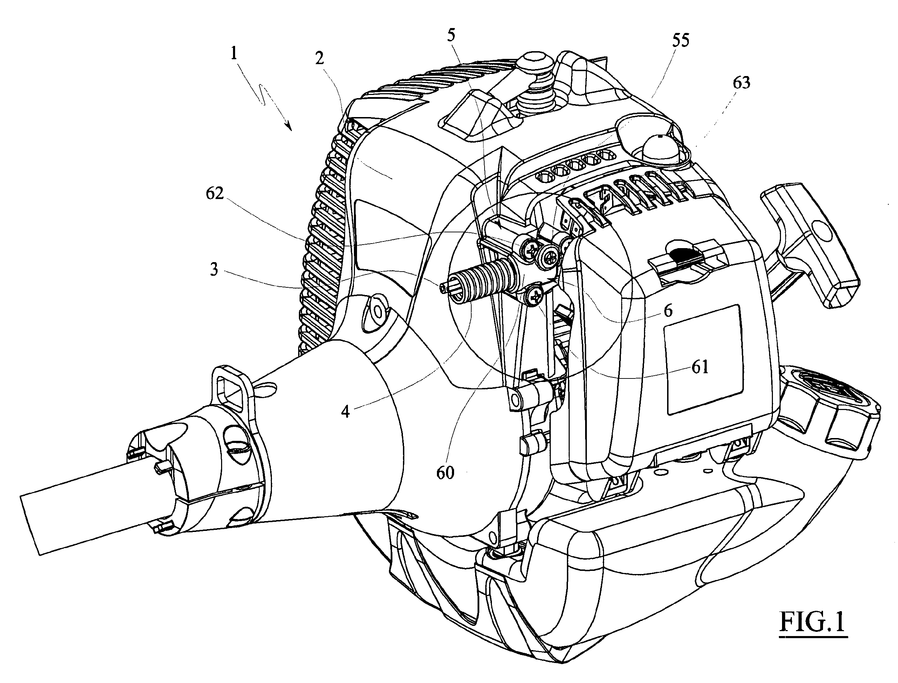

Figure 1 is a perspective view of an engine with the invention applied thereto.

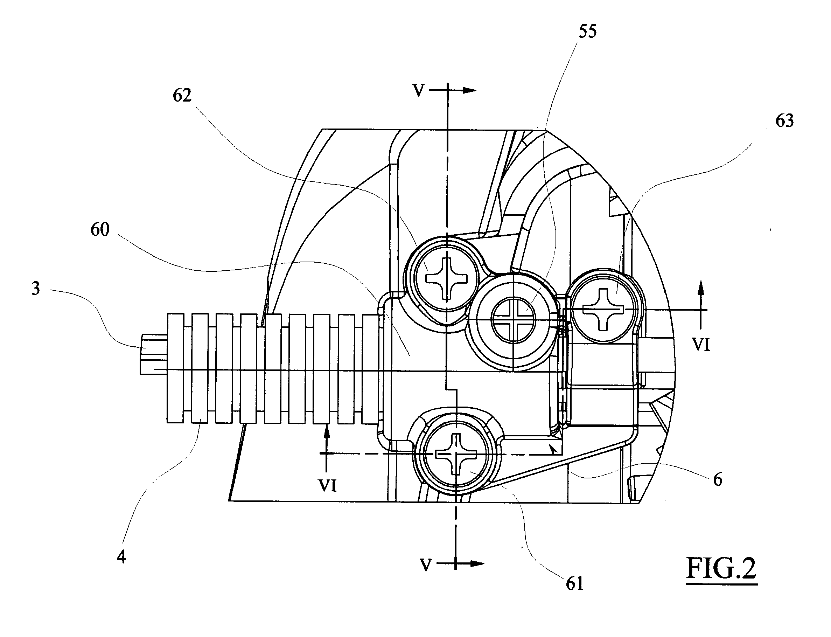

Figure 2 is a portion of the same view, from the front.

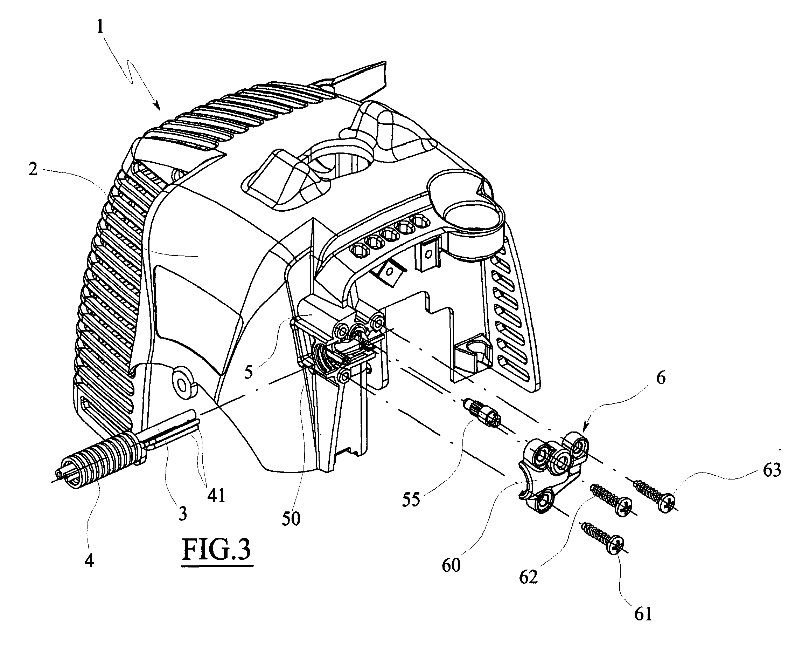

Figure 3 is the same view in an exploded view.
Figure 4 is a section of the main part of the invention, taken along the axis of the command cable.
Figure 5 is section V-V of figure 2.
Figure 6 is section VI-VI of figure 2.

The figures show that the engine 1 contained in the casing 2, in which the carburettor butterfly valve (not illustrated) is activated by the sheathed cable 3 comprising the command cable 31 contained in and slidable in the sheath 32.

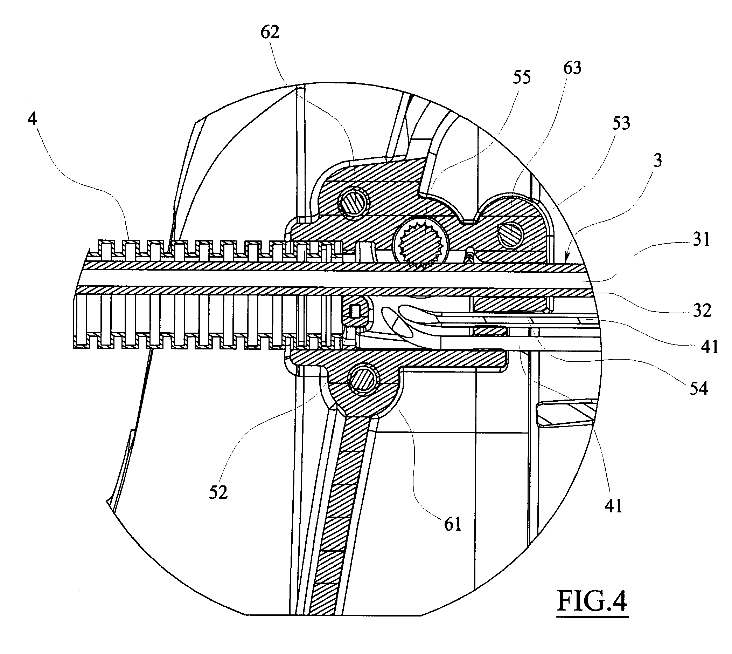

The cable 3 is brought up to the command lever, not illustrated, internally of a corrugated protection tube 4 in which the small cables 41 destined to earth the ignition for stopping the engine also run (figure 4).

The end of the sheath 32 and the tube 4 are fixed to the engine casing between a first portion 5 integrated into the casing 2 and a second portion 6 fixed to the portion 5 by means of three screws 61, 62 and 63.

The two portions 5, 6 join on a diameter plane of the corrugated tube 4.

Each of the portions 5 and 6 comprises, at an end thereof, a semi-cylindrical cavity 50, 60 located between the screws 61 and 62. The two semi-cylindrical cavities form a cylindrical cavity in which the end of the tube 4 is blocked by tightening the screws 61 and 62.

The cable 3 extends beyond the end of the tube 4 (figure 4) up to reaching in proximity of the commanded organ (not illustrated), to which the wire 31 is tensioned and fixed, by known means which are not illustrated.

The sheath 32 of the wire 31 is maintained in position resting on a shelf 52 fashioned on the portion 5, and between two shelves 53 and 54, also fashioned on the portion 5.

The sheath 32 passes between the shelf 52 and the shelves 53, 54 tangentially of a roller 55 which is knurled on a surface thereof and which frictionally engages the sheath 32.

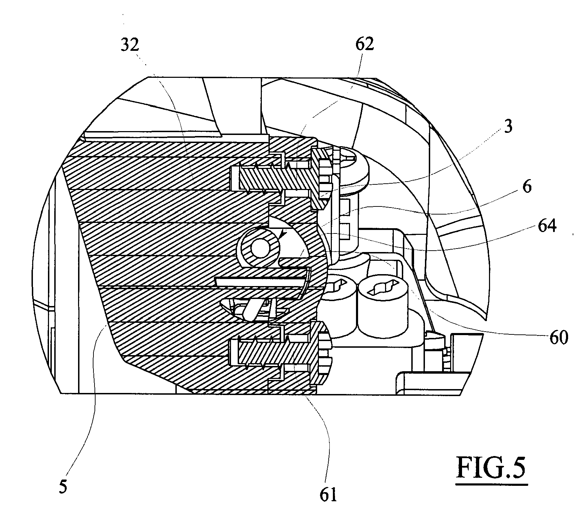

The roller 55 is supported and guided into a hole in the portion 6, and projects externally thereof with a head provided with torsional engaging means, which means can be engaged by a screw-driver. The portion 6 also comprises a shelf 64 which projects towards the portion 5 in order to come into contact with the sheath 32 such as to lock it in position (see figure 5).

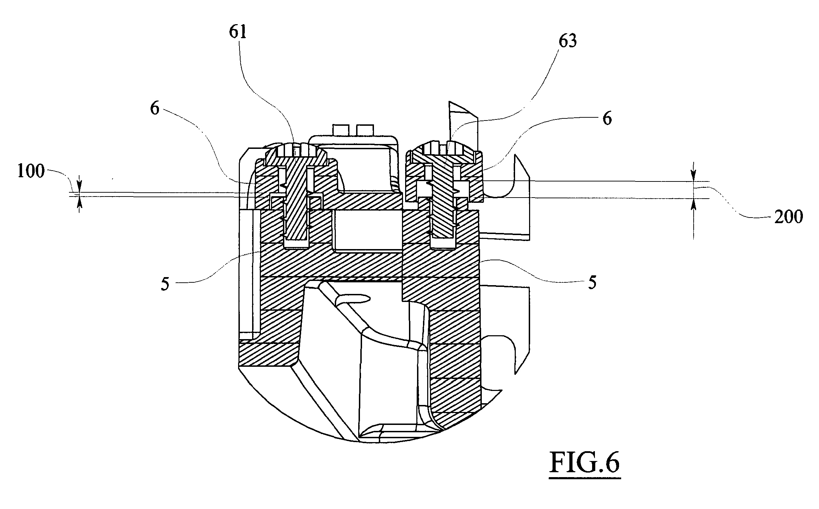

The lock is effected by tightening the screw 63 and is made possible by the fact that at the position of the screw 63 the portion 6 is distanced from the portion 5 by a quantity which is such as to make it possible to lock the sheath 32 (see figure 6).

When the portion 6 is positioned against the portion 5, before tightening the screws 61, 62 and 63, the shelf 64 rests against the sheath 32, and a degree of play 100 is left between the two portions in proximity of the screws 61 and 62 which is less than a degree of play 200 left in proximity of the screw 63 (see figure 6).

The invention functions as follows.

The operator places the corrugated tube 4 in the semi-cylindrical cavity 50 and arranges the sheath 32 which projects from the tube onto the shelf 52 and between the shelves 53 and 54, such that the sheath is maintained in contact with the knurled roller 55.

At this point the operator places the portion 6 in contact with the portion 5, with the shelf 64 in non-tightened contact with the sheath 32, a small play around the screws 61 and 62, and a comparatively larger play around the screw 63.

The operator then proceeds to tighten the screws 61 and 62, blocking the corrugated tube 4 in position.

The operator then proceeds to activate the roller 55, tensioning the sheath 32.

Once the sheath 32 has been placed under tension, the operator proceeds to tighten the screw 63, blocking the sheath in position between the portion 5 and the shelf 64 of the portion 6.

## Claims

1. An adjustment and blocking system of an accelerator cable of an internal combustion engine (1) of a portable work machine comprising the engine, a tubular frame joining the engine with the tool, and a handle located in proximity of the engine and gripped by an operator, the handle comprising a command lever of a commanded organ of the engine (1), the lever being connected to the commanded organ via a sheathed cable (3), near to the commanded organ the sheath (32) of the sheathed cable (3) being connected to the engine casing (2), and the cable (31) being connected to the commanded organ, **characterised in that** the casing (2) of the engine (1) comprises connecting means comprising two portions (5,6) realising a vice, for blocking the end of the sheath (32) of the sheathed cable (3) to the engine casing (2), and a knurled roller (55), having an axis which is perpendicular to the axis of the sheath, located in contact with the sheath (32) for adjusting its position with respect to the engine casing (2).

2. The system of claim 1, **characterised in that** the connecting means comprise a first portion (5) in form of a support shelf in a single piece with the engine casing (2) and a second portion (6) separate from the casing (2) in form of a support shelf joined to the first portion (5) the sheathed cable (3) being comprised between the first (5) and the second portion (6) passes, the second portion (6) being fixed to the first portion (5) by means of one or more screws (61,62,63), of which at least a screw (61,62) is located near the sheath (32) on a side thereof distal of the commanded organ, and at least a screw (63) is located near the sheath on a side thereof proximal of the commanded organ.

3. The system of claim 2, **characterised in that** the knurled roller (55) is supported by the second portion (6) with an end that is accessible from outside, and is pressed against a terminal portion of the sheath (32) in a tract thereof located between the first (5) and the second portion (6).

4. The system of claim 2, **characterised in that** a play is afforded between the second (6) and the first portion (5) before tightening the screws (61,62,63) and in proximity of one or more screws (61,62) located at sides of the sheath (32), which play is less than a play left in proximity of the other screw (63).

5. The system of claim 2, **characterised in that** the first portion (5) and the second portion (6) comprise two semi-cylindrical seatings (50,60) facing one another which seatings are located between the two screws (61,62) at the sides of the sheath (32), and between which two semi-cylindrical seatings (50,60) an end of a corrugated tube (4) is blocked; the two semi-cylindrical seatings (50,60) also being able to receive other electrical command wires.

## Patentansprüche

1. Justier- und Arretiersystem für einen Gaszug eines Verbrennungsmotors (1) einer transportablen Arbeitsmaschine, die den Motor, einer röhrenförmigen Rahmen, der den Motor mit dem Werkzeug verbindet, und einen Handgriff umfasst, der in der Nähe des Motors angeordnet ist und von einem Bediener ergriffen wird, wobei der Handgriff einen Befehlshebel eines Befehlsorgans des Motors (1) umfasst, wobei der Hebel über ein ummanteltes Kabel (3) mit dem Motorgehäuse (2) verbunden ist, die Ummantelung (32) des ummantelten Kabels (3) nahe dem Befehlsorgan mit dem Motorgehäuse (2) verbunden ist und das Kabel (3) mit dem Befehlsorgan verbunden ist, **dadurch gekennzeichnet, dass** das Gehäuse (2) des Motors (1) Verbindungsmittel umfasst, die zwei Abschnitte (5, 6) umfassen, die eine Spannvorrichtung bilden, um das Ende der Ummantelung (32) des ummantelten Kabels (3) am Motorgehäuse (2) zu arretieren, und ein Rändelrad (55), das eine Achse aufweist, die senkrecht zur Achse der Ummantelung liegt und in Kontakt mit der Ummantelung (32) angeordnet ist, um seine Position im Verhältnis zum Motorgehäuse (2) zu justieren.

2. System nach Anspruch 1, **dadurch gekennzeichnet, dass** die Verbindungsmittel einen ersten Abschnitt (5) in Form eines Stützfachs umfassen, das mit dem Motorgehäuse (2) einstückig gebildet ist, und einen vom Gehäuse (2) getrennten zweiten Abschnitt (6) in Form eines Stützfachs, das mit dem ersten Abschnitt (5) verbunden ist, wobei das ummantelte Kabel (3) zwischen dem ersten (5) und dem zweiten Abschnitt (6) verläuft, wobei der zweite Abschnitt (6) mit Hilfe einer oder mehrerer Schrauben (61, 62, 63) am ersten Abschnitt (5) befestigt ist, von denen mindestens eine Schraube (61, 62) nahe der Ummantelung (32) an deren vom Befehlsorgan abgewandten Seite angeordnet ist und mindestens eine Schraube (63) nahe der Ummantelung an der dem Befehlsorgan zugewandten Seite angeordnet ist.

3. System nach Anspruch 2, **dadurch gekennzeichnet, dass** das Rändelrad (55) vom zweiten Abschnitt (6) getragen wird, wobei ein Ende von außen zugänglich ist, und gegen einen Endabschnitt der Ummantelung (32), der zwischen dem ersten (5) und dem zweiten Abschnitt (6) liegt, gedrückt wird.

4. System nach Anspruch 2, **dadurch gekennzeichnet, dass** ein Spielraum zwischen dem zweiten (6) und dem ersten Abschnitt (5) gelassen wird, bevor die Schrauben (62, 62, 63) angezogen werden, und sich der Spielraum in der Nähe einer oder mehrerer Schrauben (61, 62), die sich an Seiten der Ummantelung befinden, kleiner als ein Spielraum ist, der in der Nähe der anderen Schraube (63) bleibt.

5. System nach Anspruch 2, **dadurch gekennzeichnet, dass** der erste Abschnitt (5) und der zweite Abschnitt (6) zwei halbzylindrische Sitze (50, 60) umfassen, die einander zugewandt sind, wobei die Sitze zwischen den zwei Schrauben (61, 62) an den Seiten der Ummantelung (32) angeordnet sind und wobei zwischen den zwei halbzylindrischen Sitzen (50, 60) ein Ende eines geriffelten Rohres (4) arretiert ist, wobei die zwei halbzylindrischen Sitze (50, 60) außerdem in der Lage sind, andere Leitungen für elektrische Befehle aufzunehmen.

## Revendications

1. Système de réglage et de blocage d'un câble d'accélérateur d'un moteur à combustion interne (1) d'une machine de travail portable comprenant le moteur, un châssis tubulaire reliant le moteur à l'outil, et une poignée située à proximité du moteur et saisie par un opérateur, la poignée comprenant un levier de commande d'un organe commandé du moteur (1), le levier étant connecté à l'organe commandé par l'intermédiaire d'un câble sous gaine (3), la gaine (32) du câble sous gaine (3) étant connecté au carter moteur (2) près de l'organe commandé, et le câble (31) étant connecté à l'organe commandé, **caractérisé en ce que** le carter (2) du moteur (1) comprend des moyens de connexion comprenant deux portions (5, 6) réalisant un étau, pour bloquer l'extrémité de la gaine (32) du câble sous gaine (3) au carter moteur (2), et un rouleau moleté (55), ayant un axe qui est perpendiculaire à l'axe de la gaine, positionné en contact avec la gaine (32) pour régler sa position par rapport au carter moteur (2).

2. Système selon la revendication 1, **caractérisé en ce que** les moyens de connexion comprennent une première portion (5) sous la forme d'une tablette de support d'une seule pièce avec le carter moteur (2) et une deuxième portion (6) séparée du carter (2) sous la forme d'une tablette de support unie à la première portion (5), le câble sous gaine (3) étant compris entre des passages de la première (5) et de la deuxième portion (6), la deuxième portion (6) étant fixée à la première portion (5) au moyen d'une ou plusieurs vis (61, 62, 63), dont au moins une vis (61, 62) est située près de la gaine (32) sur un côté de celle-ci distal de l'organe commandé, et au moins une vis (63) est située près de la gaine sur un côté de celle-ci proximal de l'organe commandé.

3. Système selon la revendication 2, **caractérisé en ce que** le rouleau moleté (55) est supporté par la deuxième portion (6) avec une extrémité qui est accessible de l'extérieur, et est pressé contre une portion terminale de la gaine (32) dans un tronçon de celle-ci situé entre la première (5) et la deuxième portion (6).

4. Système selon la revendication 2, **caractérisé en ce qu'**un jeu est fourni entre la première (5) et la deuxième portion (6) avant le serrage des vis (61, 62, 63) et à proximité d'une ou plusieurs vis (61, 62) situées sur les côtés de la gaine (32), lequel jeu est inférieur à un jeu laissé à proximité de l'autre vis (63).

5. Système selon la revendication 2, **caractérisé en ce que** la première portion (5) et la deuxième portion (6) comprennent deux sièges semi-cylindriques (50, 60) faisant face l'un à l'autre, lesquels sièges sont situés entre les deux vis (61, 62) sur les côtés de la gaine (32) et, entre lesquels deux sièges semi-cylindriques (50, 60), une extrémité d'un tube ondulé (4) est bloqué ; les deux sièges semi-cylindriques (50, 60) étant également adaptés pour recevoir d'autres fils électriques de commande.
